# EUROPEAN PATENT SPECIFICATION

(11) **EP 3 776 812 B1**
(45) Date of publication and mention of the grant of the patent: **04.05.2022**
(21) Application number: 19716217.5
(22) Date of filing: 26.03.2019
(51) Int. Cl.: H02K 3/12, H02K 3/28, H02K 3/22

(54) **WINDING OF AN ELECTRIC MACHINE**
WICKLUNG EINER ELECTRISCHEN MASCHINE
BOBINAGE D'UNE MACHINE ÉLECTRIQUE

(30) Priority: 04.04.2018 FI 20185312
(43) Date of publication of application: 17.02.2021
(73) Proprietor: Lappeenrannan-Lahden teknillinen yliopisto LUT, 53851 Lappeenranta (FI)
(72) Inventor: PYRHÖNEN, Juha, 53851 Lappeenranta (FI); DI, Chong, 53851 LAPPEENRANTA (FI); PETROV, Ilya, 53851 LAPPEENRANTA (FI)
(74) Representative: Väänänen, Janne Kalervo
(86) International application number: PCT/FI2019/050246
(87) International publication number: WO 2019/193246

(56) References cited:
- WO-A1-2016/189192
- DE-A1-102004 036 727
- DE-A1-102007 054 719
- US-A- 5 231 324

## Description

### Technical field

The disclosure relates generally to electric machines. More particularly, the disclosure relates to an electric machine element comprising a core structure and a double-layer multiphase-winding. The electric machine element can be for example a part of a stator of an alternating current machine. Furthermore, the disclosure relates to a method for manufacturing an electric machine element. Furthermore, the disclosure relates to an electric machine.

### Background

In a rotating electric machine, such as an electric motor or a generator, a magnetic flux is developed between electromagnetically active parts of the rotor and the stator of the electric machine. The stator of a multiphase alternating current "AC" machine comprises a multiphase-winding, e.g. a three-phase winding, for developing a rotating magnetic flux in response to supplying multiphase alternating current to the multiphase-winding. In an ideal case, the rotating magnetic flux has a sinusoidal magnetic flux density distribution in the airgap of an electric machine. In practice, the coil-sides of the multiphase-winding are located in slots of a stator core structure and thereby the linear current density in the air-gap surface of the stator has a non-sinusoidal spatial distribution. Furthermore, because of at least the slots, the airgap is non-uniform. Thus, in practice, the magnetic flux density distribution in the airgap has not only its fundamental wave but also spatial harmonics, which may cause adverse effects such as e.g. losses, mechanical vibrations, and/or noise. Especially in conjunction with a solid-rotor induction machine, there is a need to minimize the spatial harmonics since they may cause significant eddy current losses in electrically conductive rotor materials of the solid-rotor induction machine.

Some of the above-mentioned spatial harmonics can be eliminated or at least reduced by using a double-layer multiphase-winding comprising winding-portions that are circumferentially shifted with respect to each other to provide a short pitch winding. Especially in cases where the winding-portions are connected in parallel, the winding-portions are typically called winding groups. A traditional double-layer multiphase-winding is however challenging to manufacture since each coil has one coil-side on the upper layer and another coil-side on the lower layer, and many of the coil-sides belonging to the upper layer need to be left hanging in the stator bore until appropriate coil-sides belonging to the lower layer have been placed into the slots of a core structure. A two-pole machine is especially difficult as in that case all the topmost coil sides must be left hanging in the stator bore before they can be inserted in the appropriate slots. The manufacture of a traditional double-layer multiphase-winding can be especially challenging in cases where the electric conductors of the coils comprise tubular cooling channels for arranging direct liquid cooling of the winding. For example, the electric conductors can be hollow to allow cooling liquid to flow inside the electric conductors.

A simplified double-layer multiphase-winding can be manufactured so that no coil-sides are left hanging but the positions of the coil-sides in the slots are determined by an order in which the coils are installed on a stator core structure. This however results in non-symmetry between winding-portions of a phase. In many cases, there is a need for a parallel connection of the winding-portions. The parallel connection can be needed e.g. in conjunction with a high-speed machine in order to keep the stator voltage sufficiently low for a power supply that can be e.g. a frequency converter. An inherent drawback of the simplified double-layer multiphase-winding is that the winding-portions have different electrical properties, and thus unwanted circulating currents may take place in a parallel connection of these winding-portions.

Publication DE102004036727 describes an electric machine that comprises windings, e.g. stator windings, mounted in grooves. The windings have two winding systems that are galvanically separated from each other and implemented as two-layer windings. The winding systems are stacked one upon the other in the grooves in such a manner that each groove possesses four conductors, and each winding system is arranged in its supply system.

Publication DE102007054719 describes an electric machine that has a winding arrangement with a plurality of coils. The winding arrangement is divided into winding segments in a circumferential direction of a stator or a rotor. The coil sides of the coils extend in the axial direction of the electric machine and are connected to each other at the end faces of the stator or rotor. Three-phase voltage is produced in the coils by movement of the rotor and/or a rotation of the rotor is caused by three-phase alternating current in the coils.

Publication WO2016189192 describes a machine element for an electric machine. The machine element comprises a core element provided with semi-closed slots. The machine element comprises at least one winding constituted by shaped conductors each comprising a core portion for conducting electric current and a layer of electrically insulating material surrounding the core portion. The shaped conductors have a rectangular cross-sectional profile so that the widths of the shaped conductors are smaller than the width of the slot openings. The shaped conductors are placed to form, in each of the slots, an array having rows so that the rows are in the lateral direction of the slot, the rows are wider than the slot opening, and the rows are one upon the other in the depth direction of the slot. The array placing makes it possible to use semi- closed slots together with shaped conductors having a rectangular cross-sectional profile. Each of the shaped conductors can be, if needed, arranged to comprise a tubular channel for conducting water or some other suitable liquid or gaseous cooling fluid.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In accordance with the invention, there is provided a new method for manufacturing an electric machine element that comprises a core structure and a double-layer multiphase-winding. The electric machine element can be for example a part of a stator or a part of a rotor of an alternating current "AC" machine. The core structure has teeth and slots between the teeth, wherein each slot has a bottom portion and an upper portion between the bottom portion and a slot-opening of the slot. Each phase of the double-layer multiphase-winding has first and second winding-portions so that:
- first coil-sides of coils of the first winding-portion are located in slots belonging to a first zone,
- second coil-sides of the coils of the first winding-portion are located in slots belonging to a second zone, a circumferential shift from the first zone to the second zone being less than 180 electrical degrees,
- first coil-sides of coils of the second winding-portion are located in slots belonging to a third zone partially overlapping with the first zone, a circumferential shift from the second zone to the third zone being 180 electrical degrees, and
- second coil-sides of the coils of the second winding-portion are located in slots belonging to a fourth zone partially overlapping with the second zone, a circumferential shift from the first zone to the fourth zone being 180 electrical degrees,

The method for manufacturing the above-described electric machine element comprises:
- placing, into the bottom portions of the slots belonging to the first zone and outside the third zone, a part of the first coil-sides of the first winding-portion,
- placing, into the bottom portions of the slots belonging to the second zone, the second coil-sides of the first winding-portion,
- placing, into the bottom portions of the slots belonging to the third zone, the first coil-sides of the second winding-portion,
- placing, into the slots belonging to the fourth zone, the second coil-sides of the second winding-portion, and
- placing, into the upper portions of the slots belonging to the first and third zones, the rest of the first coil-sides of the first winding-portion after the first coil-sides of the second winding-portion have been placed into the bottom portions of these slots belonging to the third and first zones.

In the above-described method, only the first coil-sides of the first winding-portion which belong to the first and third zones need to be left hanging outside the respective slots when installing the above-mentioned first and second winding portions of the phase under consideration. Thus, the above-described method is simpler than a method for manufacturing a traditional double-layer winding where more coil-sides, or in case of a two-pole machine all coil-sides, need to be left hanging outside the appropriate slots when installing the first and second winding portions of a phase.

In each phase, the above-mentioned first and second winding portions are similar to each other and thus circulating currents between the winding-portions are eliminated or at least small in cases where the winding-portions are connected in parallel.

In accordance with the invention, there is provided also a new electric machine element. The electric machine element comprises the above-mentioned core structure and the above-mentioned double-layer multiphase-winding, wherein the double-layer multiphase-winding is distinguished from a traditional double-layer multiphase-winding by the following:
- the bottom portions of the slots belonging to the above-mentioned first zone and outside the above-mentioned third zone contain a part of the first coil-sides of the coils of the first winding-portion,
- the upper portions of the slots belonging to the first and third zones contain the rest of the first coil-sides of the coils of the first winding-portion,
- the bottom portions of the slots belonging to the above-mentioned fourth zone and outside the above-mentioned second zone contain a part of the second coil-sides of the coils of the second winding-portion, and
- the upper portions of the slots belonging to the second and fourth zones contain the rest of the second coil-sides of the coils of the second winding-portion.

In accordance with the invention, there is provided also a new electric machine. An electric machine according to the invention comprises a stator and a rotor rotatably supported with respect to the stator. At least one of the stator and the rotor comprises an electric machine element according to the invention.

Various exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below in the sense of examples and with reference to the accompanying drawings, in which:
figures 1a, 1b, and 1c illustrate an electric machine element according to an exemplifying and non-limiting embodiment of the invention, and a method for manufacturing the electric machine element,
figure 2 illustrates an electric machine element according to an exemplifying and non-limiting embodiment of the invention,
figure 3 shows a flowchart of a method according to an exemplifying and non-limiting embodiment of the invention for manufacturing an electric machine element, and
figure 4 illustrates an electric machine according to an exemplifying and non-limiting embodiment of the invention.

### Description of the exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

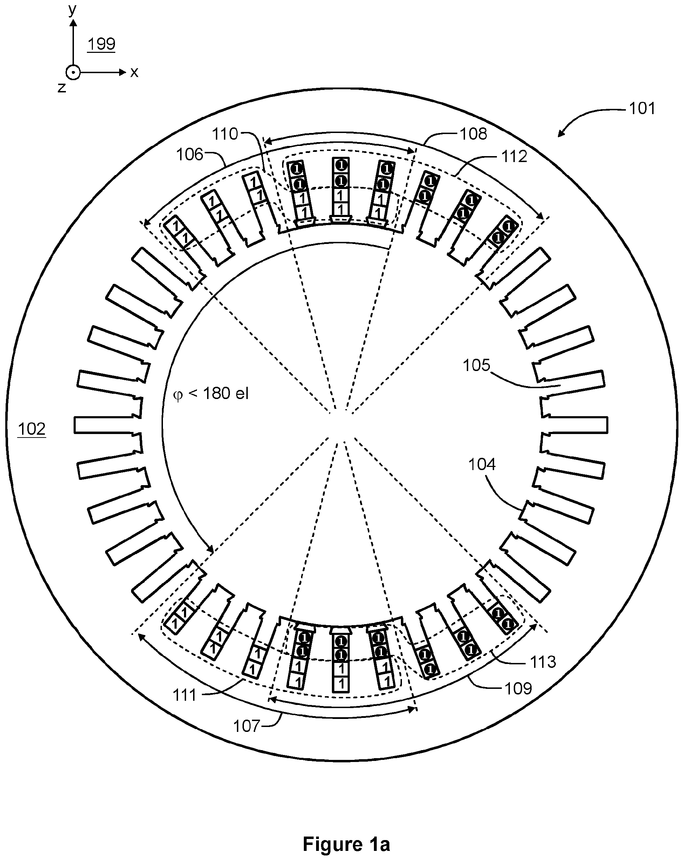

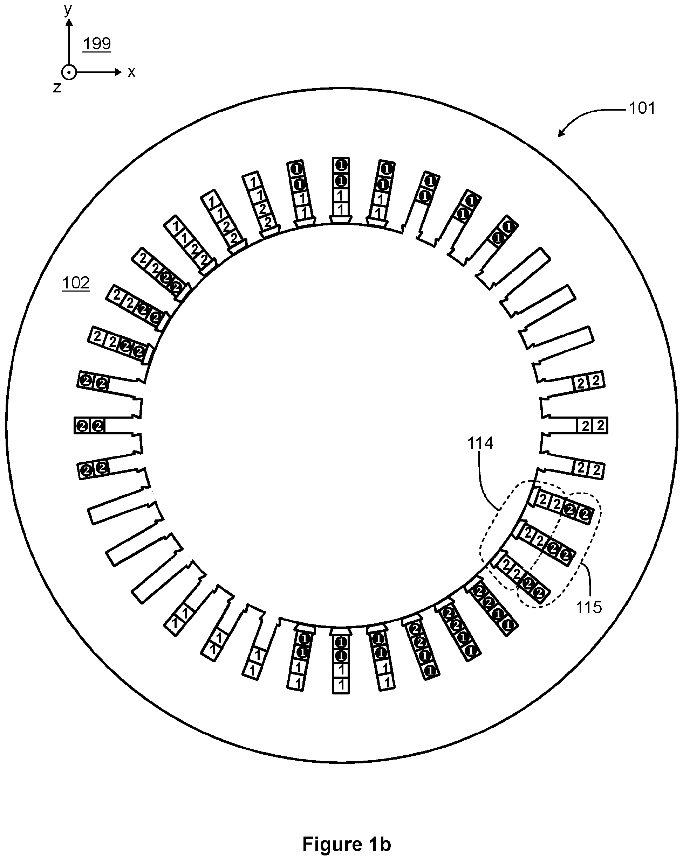

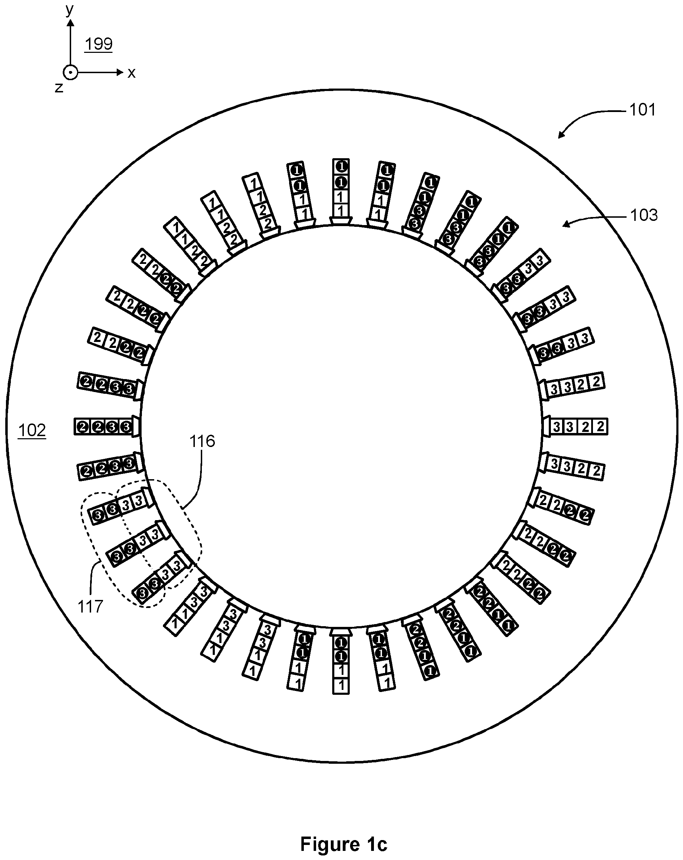

Figures 1a, 1b, and 1c illustrate an electric machine element 101 according to an exemplifying and non-limiting embodiment of the invention. Figures 1a, 1b, and 1c illustrate the electric machine element 101 in different manufacturing stages. In this exemplifying case, the electric machine element 101 is a part of a stator of a radial-flux inner-rotor electric machine. The axial direction of the electric machine is parallel with the z-axis of a coordinate system 199. The electric machine element 101 comprises a core structure 102 that comprises a yoke section and teeth connected to the yoke section and slots between the teeth. In figure 1a, one of the teeth is denoted with a reference 104 and one of the slots is denoted with a reference 105. The core structure 102 can be made of, or at least comprise, ferromagnetic material.

The core structure 102 may comprise e.g. a stack of ferromagnetic sheets that are electrically insulated from each other and stacked in the axial direction, i.e. in the z-direction of the coordinate system 199.

The electric machine element 101 comprises a double-layer multiphase-winding. In figure 1c, the double-layer multiphase-winding is denoted with a reference 103. In the exemplifying electric machine element 101 illustrated in figures 1a-1c, the double-layer multiphase-winding is a double-layer three-phase winding whose number of pole-pairs is one. Figure 1a shows a manufacturing stage where coils of one of the three phases have been placed into the slots of the core structure 102, figure 1b shows a manufacturing stage where coils of two of the three phases have been placed into the slots of the core structure 102, and figure 1c shows a manufacturing stage where coils of the all three phases have been placed into the slots of the core structure 102. Each phase has first and second winding-portions which are circumferentially shifted by three slot pitches with respect to each other. In figures 1a-1c, the first winding portion of a first one of the phases is denoted with black '1's and the second winding portion of the first phase is denoted with white '1's in black circles. In figures 1b and 1c, the first winding portion of a second one of the phases is denoted with black '2's and the second winding portion of the second phase is denoted with white '2's in black circles. In figure 1c, the first winding portion of a third one of the phases is denoted with black '3's and the second winding portion of the third phase is denoted with white '3's in black circles.

The winding of the first phase is considered in more details below with reference to figure 1a. In figure 1a, first coil-sides of coils of the first winding-portion are denoted with a reference 110 and second coil-sides of the coils of the first winding-portion are denoted with a reference 111. First coil-sides of coils of the second winding-portion are denoted with a reference 112 and second coil-sides of the coils of the second winding-portion are denoted with a reference 113. The coil-sides 110 are located in slots belonging to a first zone 106 and the coil-sides 111 are located in slots belonging to a second zone 107, wherein the circumferential shift ϕ from the first zone 106 to the second zone 107 is less than 180 electrical degrees thus providing a short pitch winding. The coil-sides 112 are located in the slots belonging to a third zone 108 that partially overlaps with the first zone 106. As shown by figure 1a, the circumferential shift from the third zone 108 to the second zone 107 is 180 electrical degrees. The coil-sides 113 are located in the slots belonging to a fourth zone 109 that partially overlaps with the second zone 107. As shown by figure 1a, the circumferential shift from the first zone 106 to the fourth zone 109 is 180 electrical degrees. In the exemplifying electric machine element 101 illustrated in figures 1a-1c, there are 36 slots and the above-mentioned circumferential shift ϕ is 15 slot pitches, i.e. 150 electrical degrees, and each of the zones 106-109 comprises six slots. As a corollary, the overlap area between the zones 106 and 108 comprises three slots and correspondingly the overlap area between the zones 107 and 109 comprises three slots, too. In the exemplifying case illustrated in figures 1a-1c, an electrical degree equals a geometric degree since the number of pole pairs is one.

Each slot of the core structure 102 is deemed to comprise a bottom portion and an upper portion between the bottom portion and the slot-opening of the slot under consideration. As shown by figure 1a, the coil-sides 110 are located in the slots of the zone 106 so that the bottom portions of the slots belonging to the zone 106 and outside the zone 108 contain a part of the coil-sides 110 and the upper portions of the slots belonging to the both zones 106 and 108 contain the rest of the coil-sides 110. Correspondingly, the coil-sides 113 are located in the slots of the zone 109 so that the bottom portions of the slots belonging to the zone 109 and outside the zone 107 contain a part of the coil-sides 113 and the upper portions of the slots belonging to the both zones 107 and 109 contain the rest of the coil-sides 113. The coil-sides 112 are located in the bottom portions of the slots belonging to the zone 108. Correspondingly, the coil-sides 111 are located in the bottom portions of the slots belonging to the zone 107. The first winding-portion comprising the coil-sides 110 and 111 can be for example parallel connected with the second winding portion comprising the coil-sides 112 and 113. As shown by figure 1a, the first and second winding portions are similar to each other. Thus, circulating currents between the first and second winding-portions are eliminated or at least small.

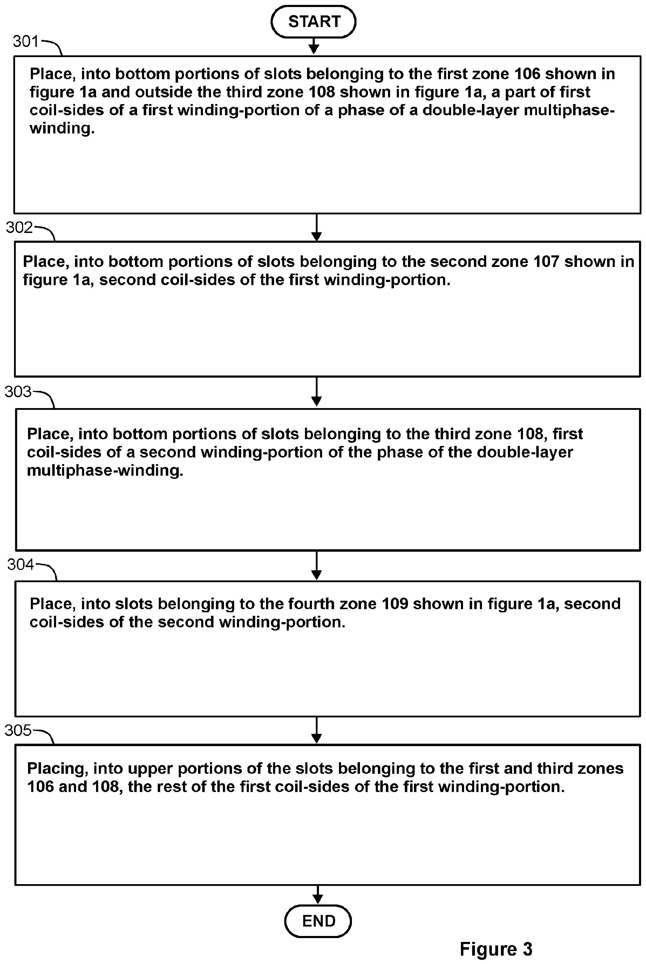

An exemplifying method for installing the above-mentioned coil sides 110-113 on the core structure 102 is illustrated with a flowchart shown in figure 3. The method comprises the following actions:
- action 301: placing, into the bottom portions of the slots belonging to the first zone 106 and outside the third zone 108, a part of the coil-sides 110 of the first winding-portion, and leaving the rest of the coil-sides 110 hanging,
- action 302: placing, into the bottom portions of the slots belonging to the second zone 107, the coil-sides 111 of the first winding-portion,
- action 303: placing, into the bottom portions of the slots belonging to the third zone 108, the coil-sides 112 of the second winding-portion,
- action 304: placing, into the slots belonging to the fourth zone 109, the coil-sides 113 of the second winding-portion, and
- action 305: placing, into the upper portions of the slots belonging to the first and third zones 106 and 108, those of the coil-sides 110 of the first winding-portion which were left hanging.

It is also possible to begin the installation with the second winding portion instead of the first winding portion. In this exemplifying case, those of the coil sides 113 which belong to the both zones 107 and 109 are left hanging and placed into the upper portions of the respective slots after the appropriate coil sides belonging the first winding portion have been placed into the bottom portions of these slots. The above-mentioned actions 301 and 302 can be interleaved so that both coil-sides of each coil, except the coils whose coils sides are left hanging, are installed prior to starting to install a next coil so as to minimize the number of coil sides which are hanging and waiting for installation. Correspondingly, the above-mentioned actions 303 and 304 can be interleaved in the above-mentioned way.

As mentioned above, figure 1b shows the manufacturing stage where the coils of the first and second ones of the three phases have been placed into the slots of the core structure 102. As mentioned above, the first winding portion of the second phase is denoted with the black '2's and the second winding portion of the second phase is denoted with the white '2's in the black circles. The first and second winding portions of the second phase can be installed in the way described above in conjunction with the first phase. In an exemplifying method of installation, coil-sides 114 can be left hanging until coil sides 115 have been placed into the bottom portions of the respective slots and thereafter the coil-sides 114 can be placed into the upper portions of these slots. As mentioned above, figure 1c shows the manufacturing stage where the coils of the all three phases have been placed into the slots of the core structure 102. As mentioned above, the first winding portion of the third phase is denoted with the black '3's and the second winding portion of the third phase is denoted with the white '3's in black circles. The first and second winding portions of the third phase can be installed in the way described above in conjunction with the first phase. In an exemplifying method of installation, coil-sides 116 can be left hanging until coil sides 117 have been placed into the bottom portions of the respective slots and thereafter the coil-sides 116 can be placed into the upper portions of these slots. As shown by figure 1c, the first and second winding portions are similar to each other in each phase. Thus, circulating currents between the first and second winding-portions are eliminated or at least small in each phase. Small circulating currents may run in a delta connection as the windings of the phases are not fully similar. The induced voltages are substantially similar between the phases, but the leakage inductances of the phases may differ from each other. However, in star connection the circulating currents between phases are avoided but differences between phases may cause imbalance in currents e.g. a non-zero negative-sequence current component. The above-described manufacturing results in magnetically slightly different individual phases, which may have parallel paths without circulating currents. However, as the phases are not fully similar to each other, additional means are advantageous to balance the properties of the phases.

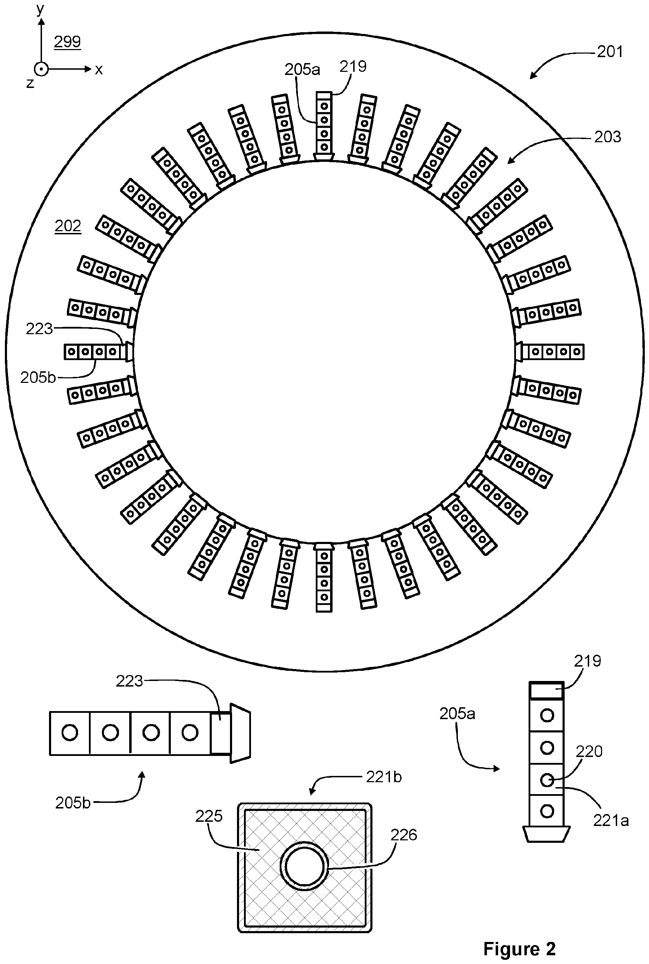

Figure 2 illustrates an electric machine element 201 according to an exemplifying and non-limiting embodiment of the invention. The electric machine element 201 is a part of a stator of a radial-flux inner-rotor electric machine. The axial direction of the electric machine is parallel with the z-axis of a coordinate system 299. The electric machine element 201 comprises a core structure 202 that comprises a yoke section and teeth connected to the yoke section and slots between the teeth. In figure 2, two of the slots are denoted with references 205a and 205b. The electric machine element 201 comprises a double-layer three-phase winding whose connection arrangement can be for example the same as that of the winding described above with reference to figures 1a-1c.

The exemplifying electric machine element illustrated in figure 2 comprises filler elements arranged to determine positions of the coil-sides in the depth directions of the slots so that the filler elements in first ones of the slots are arranged to determine the positions of the respective coil-sides differently than the corresponding filler elements in second ones of the slots so as to equalize inductances of the phases by adjusting the slot leakage inductances when the coil-sides have different positions within the slots. In figure 2, the filler element located in the slot 205a is denoted with a reference 219 and the filler element located in the slot 205b is denoted with a reference 223. Figure 2 shows also magnified views of the slots 205a and 205b. The leakage inductance of each coil-side is dependent on the position of the coil-side under consideration in the depth direction of the slot containing the coil-side. In the exemplifying case illustrated in figure 2, the leakage inductances of the coil-sides in the slot 205b are increased by positioning the coil-sides farther from the airgap by placing the filler element 223 on the slot opening region. The leakage inductances of the coil-sides in the slot 205a are not increased in the same way since the filler element 219 is located in the bottom portion of the slot 205a. The filler elements can be made of for example plastic or fiber reinforced plastic or resin.

It is worth noting that the above-described principle for equalizing inductances and based on the filler elements is applicable also on windings which are not double-layer windings. In general terms, an electric machine element where the above-described principle is utilized comprises:
- a core structure having teeth and slots between the teeth,
- a multiphase-winding whose coil-sides are located in the slots, and
- filler elements arranged to determine positions of at least some of the coil sides in depth directions of the slots so that the filler elements in first one or ones of the slots are arranged to determine the positions of the coil-sides differently than the filler elements in second one or ones of the slots so as to equalize inductances of phases of the multi-phase winding by adjusting the slot leakage inductances when the coil-sides have different positions within the slots.

A method for manufacturing the above-mentioned electric machine element comprises placing the filler elements into at least some of the slots to determine the positions of the respective coil-sides in the depth directions of the slots so that the filler elements in the first one or ones of the slots determine the positions of the coil-sides differently than the filler elements in the second one or ones of the slots so as to equalize the inductances of the phases of the multi-phase winding.

In the exemplifying electric machine element illustrated in figure 2, each coil of the double-layer three-phase winding comprises an elongated conductor element that comprises a tubular cooling channel and electrically conductive material surrounding the tubular cooling channel. In figure 2, an elongated conductor element located in the slot 205a is denoted with a reference 221a and the tubular cooling channel of the elongated conductor element 221a is denoted with a reference 220. In this exemplifying case, the elongated conductor element 221a comprises a tubular electric conductor made of the electrically conductive material and forming the tubular cooling channel. The electrically conductive material can be for example copper or aluminum. It is also possible that an elongated conductor element comprises a cooling tube made of material different from the electrically conductive material. In this exemplifying case, the cooling tube can be made of for example steel, e.g. stainless steel.

In an electric machine element according to an exemplifying and non-limiting embodiment of the invention, each coil of the winding comprises an elongated conductor element that comprises a bundle of wires made of electrically conductive material and surrounding a cooling tube. Figure 2 shows a cross-section of an elongated conductor element 221b of the kind described above. The bundle of the electrically conductive wires is denoted with a reference 225. The bundle may comprise for example 50-300 copper strands. In an exemplifying case, the bundle is composed of Litz-wires. In this exemplifying case, each wire of the bundle is itself a bundle of thin filaments that are twisted or woven.

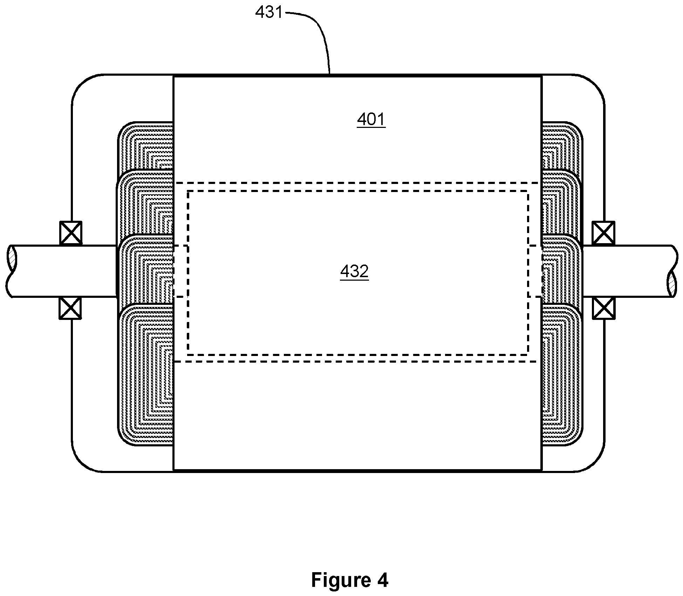

Figure 4 illustrates an electric machine according to an exemplifying and non-limiting embodiment of the invention. The electric machine comprises a stator 431 and a rotor 432 that is rotatably supported with respect to the stator. The stator 431 comprises an electric machine element 401 according to an embodiment of the invention. The electric machine element 401 can be for example such as described above with reference to figures 1a-1c or such as described above with reference to figure 2.

The exemplifying electric machine illustrated in figure 4 can be for example a permanent magnet machine. In this exemplifying case, the rotor 432 comprises permanent magnets for producing an excitation magnetic flux. An electric machine according to an embodiment of the invention can be as well for example an induction machine, a synchronous reluctance machine, a slip-ring asynchronous machine, or an electrically excited synchronous machine. In an exemplifying case where the electric machine is a slip-ring asynchronous machine and the rotor 432 comprises a multiphase-winding, the rotor 432 may comprise an electric machine element according to an embodiment of the invention.

The exemplifying electric machine described above with reference to figure 4 is a radial-flux inner-rotor electric machine. It is to be noted that an electric machine according to an embodiment of the invention can be as well for example a radial-flux outer-rotor electric machine or an axial-flux electric machine.

The specific examples provided in the description given above should not be construed as limiting the applicability and/or interpretation of the appended claims. It is to be noted that lists and groups of examples given in this document are non-exhaustive lists and groups unless otherwise explicitly stated.

## Claims

1. An electric machine element (101, 201, 401) comprising a core structure (102, 202) and a double-layer multiphase-winding (103, 203), the core structure having teeth (104) and slots (105, 205a, 205b) between the teeth, wherein each of the slots has a bottom portion and an upper portion between the bottom portion and a slot-opening, and wherein each phase of the double-layer multiphase-winding has first and second winding-portions so that:
- first coil-sides (110) of coils of the first winding-portion are located in ones of the slots belonging to a first zone (106),
- second coil-sides (111) of the coils of the first winding-portion are located in ones of the slots belonging to a second zone (107), a circumferential shift (ϕ) from the first zone to the second zone being less than 180 electrical degrees,
- first coil-sides (112) of coils of the second winding-portion are located in ones of the slots belonging to a third zone (108) partially overlapping with the first zone, a circumferential shift from the second zone to the third zone being 180 electrical degrees, and
- second coil-sides (113) of the coils of the second winding-portion are located in ones of the slots belonging to a fourth zone (109) partially overlapping with the second zone, a circumferential shift from the first zone to the fourth zone being 180 electrical degrees,
**characterized in that**:
- the bottom portions of the slots belonging to the first zone (106) and outside the third zone (107) contain a part of the first coil-sides (110) of the first winding-portion,
- the upper portions of the slots belonging to the first and third zones (106, 108) contain the rest of the first coil-sides (110) of the first winding-portion
- the bottom portions of the slots belonging to the fourth zone (109) and outside the second zone (107) contain a part of the second coil-sides (113) of the second winding-portion, and
- the upper portions of the slots belonging to the second and fourth zones (107, 109) contain the rest of the second coil-sides (113) of the second winding-portion.

2. An electric machine element according to claim 1, wherein the electric machine element further comprises filler elements (219, 223) arranged to determine positions of at least some of the coil sides in depth directions of the slots (205a, 205b) so that the filler elements in first one or ones of the slots are arranged to determine the positions of the coil sides differently than the filler elements in second one or ones of the slots so as to equalize inductances of the phases of the double-layer multi-phase winding, leakage inductance of each coil side being dependent on the position of the coil-side under consideration in the depth direction of the slot containing the coil-side under consideration.

3. An electric machine element according to claim 1 or 2, wherein each of the coils of the double-layer multiphase-winding comprises an elongated conductor element (221a, 221b) comprising a tubular cooling channel (220) and electrically conductive material surrounding the tubular cooling channel.

4. An electric machine element according to claim 3, wherein the elongated conductor element (221a) comprises a tubular electric conductor made of the electrically conductive material and forming the tubular cooling channel.

5. An electric machine element according to claim 3, wherein the elongated conductor element (221b) comprises a cooling tube (226) made of material different from the electrically conductive material, the cooling tube forming the tubular cooling channel.

6. An electric machine element according to claim 5, wherein the elongated conductor element comprises a bundle (225) of wires made of the electrically conductive material and surrounding the cooling tube.

7. An electric machine element according to claim 5 or 6, wherein the cooling tube (226) is made of stainless steel.

8. An electric machine element according to any of claims 1-7, wherein the core structure (102, 202) is a stator core structure of a radial-flux inner-rotor electric machine and the double-layer multiphase-winding (103, 203) is a stator winding of the radial-flux inner-rotor electric machine.

9. An electric machine element according to claim 8, wherein the double-layer multi-phase winding is a three-phase winding whose number of pole-pairs is one.

10. An electric machine element according to claim 9, wherein the first and second winding-portions of each phase of the double-layer multi-phase winding are parallel connected with each other.

11. An electric machine element according to claim 9 or 10, wherein the circumferential shift (ϕ) from the first zone (106) to the second zone (107) is 150 electrical degrees.

12. An electrical machine comprising a stator (431) and a rotor (432) rotatably supported with respect to the stator, wherein at least one of the stator and the rotor comprises an electric machine element (101, 201, 401) according to any of claims 1-11.

13. An electrical machine according to claim 12, wherein the electric machine is a radial-flux inner-rotor electric machine, the electric machine element (101, 201, 401) is a part of the stator, and the electric machine element is according to any of claims 8-11.

14. A method for manufacturing an electric machine element (101) that comprises a core structure (102) and a double-layer multiphase-winding (103), the core structure having teeth (104) and slots between the teeth, wherein each of the slots has a bottom portion and an upper portion between the bottom portion and a slot-opening, and wherein each phase of the double-layer multiphase-winding has first and second winding-portions so that:
- first coil-sides (110) of coils of the first winding-portion are located in ones of the slots belonging to a first zone (106),
- second coil-sides (111) of the coils of the first winding-portion are located in ones of the slots belonging to a second zone (107), a circumferential shift (ϕ) from the first zone to the second zone being less than 180 electrical degrees,
- first coil-sides (112) of coils of the second winding-portion are located in ones of the slots belonging to a third zone (108) partially overlapping with the first zone, a circumferential shift from the second zone to the third zone being 180 electrical degrees, and
- second coil-sides (113) of the coils of the second winding-portion are located in ones of the slots belonging to a fourth zone (109) partially overlapping with the second zone, a circumferential shift from the first zone to the fourth zone being 180 electrical degrees,
**characterized in that** the method comprises:
- placing (301), into the bottom portions of the slots belonging to the first zone and outside the third zone, a part of the first coil-sides of the first winding-portion,
- placing (302), into the bottom portions of the slots belonging to the second zone, the second coil-sides of the first winding-portion,
- placing (303), into the bottom portions of the slots belonging to the third zone, the first coil-sides of the second winding-portion,
- placing (304), into the slots belonging to the fourth zone, the second coil-sides of the second winding-portion, and
- placing (305), into the upper portions of the slots belonging to the first and third zones, the rest of the first coil-sides of the first winding-portion after the first coil-sides of the second winding-portion have been placed into the bottom portions of the slots belonging to the third and first zones.

15. A method according to claim 14, wherein the method comprises placing, into at least some of the slots, filler elements (219, 223) to determine positions of the coil sides in depth directions of the slots so that the filler elements in first one or ones of the slots determine the positions of the coil sides differently than the filler elements in second one or ones of the slots so as to equalize inductances of the phases of the double-layer multi-phase winding, leakage inductance of each coil side being dependent on the position of the coil-side under consideration in the depth direction of the slot containing the coil-side under consideration.

## Patentansprüche

1. Elektrisches Maschinenelement (101, 201, 401), umfassend eine Kernstruktur (102, 202) und eine doppellagige Mehrphasenwicklung (103, 203), wobei die Kernstruktur Zähne (104) und Schlitze (105, 205a, 205b) zwischen den Zähnen aufweist, wobei jeder der Schlitze einen unteren Abschnitt und einen oberen Abschnitt zwischen dem unteren Abschnitt und einer Schlitzöffnung aufweist, und wobei jede Phase der doppellagigen Mehrphasenwicklung einen ersten und einen zweiten Wicklungsabschnitt aufweist, so dass:
- erste Windungsseiten (110) von Windungen des ersten Wicklungsabschnitts in einem der Schlitze angeordnet sind, die zu einer ersten Zone (106) gehören,
- zweite Windungsseiten (111) der Windungen des ersten Wicklungsabschnitts in einem der Schlitze angeordnet sind, die zu einer zweiten Zone (107) gehören, wobei eine Umfangsverschiebung (p) von der ersten Zone zu der zweiten Zone weniger als 180 elektrische Grad beträgt,
- erste Windungsseiten (112) der Windungen des zweiten Wicklungsabschnitts in einem der Schlitze angeordnet sind, die zu einer dritten Zone (108) gehören, die sich teilweise mit der ersten Zone überlappt, wobei eine Umfangsverschiebung von der zweiten Zone zu der dritten Zone 180 elektrische Grad beträgt, und
- zweite Windungsseiten (113) der Windungen des zweiten Wicklungsabschnitts in einem der Schlitze angeordnet sind, die zu einer vierten Zone (109) gehören, die sich teilweise mit der zweiten Zone überlappt, wobei eine Umfangsverschiebung von der ersten Zone zu der vierten Zone 180 elektrische Grad beträgt,
**gekennzeichnet dadurch, dass**:
- die unteren Abschnitte der Schlitze, die zu der ersten Zone (106) gehören und außerhalb der dritten Zone (107) sind, einen Teil der ersten Windungsseiten (110) des ersten Wicklungsabschnitts enthalten,
- die oberen Abschnitte der Schlitze, die zu der ersten und der dritten Zone (106, 108) gehören, den Rest der ersten Windungsseiten (110) des ersten Wicklungsabschnitts enthalten,
- die unteren Abschnitte der Schlitze, die zu der vierten Zone (109) gehören und außerhalb der zweiten Zone (107) sind, einen Teil der zweiten Windungsseiten (113) des zweiten Wicklungsabschnitts enthalten, und
- die oberen Abschnitte der Schlitze, die zu der zweiten und der vierten Zone (107, 109) gehören, den Rest der zweiten Windungsseiten (113) des zweiten Wicklungsabschnitts enthalten.

2. Elektrisches Maschinenelement nach Anspruch 1, wobei das elektrische Maschinenelement ferner Füllelemente (219, 223) umfasst, die dazu ausgebildet sind, Positionen von zumindest einigen der Windungsseiten in Tiefenrichtungen der Schlitze (205a, 205b) zu bestimmen, so dass die Füllelemente in einem oder mehreren ersten Schlitzen dazu ausgebildet sind, die Positionen der Windungsseiten unterschiedlich zu den Füllelementen in einem oder mehreren zweiten Schlitzen zu bestimmen, um die Induktivitäten der Phasen der doppellagigen Mehrphasenwicklung auszugleichen, wobei die Streuinduktivität jeder Windungenseite von der Position der betrachteten Windungenseite in Tiefenrichtung des Schlitzes, der die betrachtete Windungenseite enthält, abhängig ist.

3. Elektrisches Maschinenelement nach Anspruch 1 oder 2, wobei jede der Windungen der doppellagigen Mehrphasenwicklung ein längliches Leiterelement (221a, 221b) umfasst, das einen röhrenförmigen Kühlkanal (220) und elektrisch leitfähiges Material, das diesen röhrenförmigen Kühlkanal umgibt, umfasst.

4. Elektrisches Maschinenelement nach Anspruch 3, wobei das längliche Leiterelement (221a) einen röhrenförmigen elektrischen Leiter umfasst, der aus dem elektrisch leitenden Material besteht und den röhrenförmigen Kühlkanal bildet.

5. Elektrisches Maschinenelement nach Anspruch 3, wobei das längliche Leiterelement (221b) ein Kühlrohr (226) umfasst, das aus einem anderen Material als das elektrisch leitenden Material besteht, wobei das Kühlrohr den röhrenförmigen Kühlkanal bildet.

6. Elektrisches Maschinenelement nach Anspruch 5, wobei das längliche Leiterelement ein Bündel (225) von Drähten umfasst, die aus dem elektrisch leitenden Material bestehen und das Kühlrohr umgeben.

7. Elektrisches Maschinenelement nach Anspruch 5 oder 6, wobei das Kühlrohr (226) aus Edelstahl besteht.

8. Elektromaschinenelement nach einem der Ansprüche 1 bis 7, wobei die Kernstruktur (102, 202) eine Statorkernstruktur einer elektrischen Radialfluss-Innenrotormaschine ist und die doppellagige Mehrphasenwicklung (103, 203) eine Statorwicklung der elektrischen Radialfluss-Innenrotormaschine ist.

9. Elektrisches Maschinenelement nach Anspruch 8, wobei die doppellagige Mehrphasenwicklung eine Dreiphasenwicklung ist, deren Anzahl von Polpaaren eins beträgt.

10. Elektrisches Maschinenelement nach Anspruch 9, wobei der erste und der zweite Wicklungsabschnitt jeder Phase der doppellagigen Mehrphasenwicklung zueinander parallelgeschaltet sind.

11. Elektrisches Maschinenelement nach Anspruch 9 oder 10, wobei die Umfangsverschiebung (p) von der ersten Zone (106) zu der zweiten Zone (107) 150 elektrische Grad beträgt.

12. Elektrische Maschine, umfassend einen Stator (431) und einen Rotor (432), der in Bezug auf den Stator drehbar gelagert ist, wobei zumindest einer von dem Stator und dem Rotor ein elektrisches Maschinenelement (101, 201, 401) nach einem der Ansprüche 1 bis 11 umfasst.

13. Elektrische Maschine nach Anspruch 12, wobei die elektrische Maschine eine elektrische Radialfluss-Innenrotormaschine ist, das elektrische Maschinenelement (101, 201, 401) ein Teil des Stators ist, und das elektrische Maschinenelement nach einem der Ansprüche 8 bis 11 gebildet ist.

14. Verfahren zur Herstellung eines elektrischen Maschinenelements (101), das eine Kernstruktur (102) und eine doppellagige Mehrphasenwicklung (103) umfasst, wobei die Kernstruktur Zähne (104) und Schlitze zwischen den Zähnen aufweist, wobei jeder der Schlitze einen unteren Abschnitt und einen oberen Abschnitt zwischen dem unteren Abschnitt und einer Schlitzöffnung aufweist, und wobei jede Phase der doppellagigen Mehrphasenwicklung einen ersten und einen zweiten Wicklungsabschnitt aufweist, so dass:
- erste Windungsseiten (110) der Windungen des ersten Wicklungsabschnitts in einem der Schlitze angeordnet sind, die zu einer ersten Zone (106) gehören,
- zweite Windungsseiten (111) der Windungen des ersten Wicklungsabschnitts in einem der Schlitze angeordnet sind, die zu einer zweiten Zone (107) gehören, wobei eine Umfangsverschiebung (p) von der ersten Zone zu der zweiten Zone weniger als 180 elektrische Grad beträgt,
- erste Windungsseiten (112) der Windungen des zweiten Wicklungsabschnitts in einem der Schlitze angeordnet sind, die zu einer dritten Zone (108) gehören, die sich teilweise mit der ersten Zone überlappt, wobei eine Umfangsverschiebung von der zweiten Zone zu der dritten Zone 180 elektrische Grad beträgt, und
- zweite Windungsseiten (113) der Windungen des zweiten Wicklungsabschnitts in einem der Schlitze angeordnet sind, die zu einer vierten Zone (109) gehören, die sich teilweise mit der zweiten Zone überlappt, wobei eine Umfangsverschiebung von der ersten Zone zu der vierten Zone 180 elektrische Grad beträgt,
**gekennzeichnet dadurch, dass** das Verfahren umfasst:
- Platzieren (301) eines Teils der ersten Windungsseiten des ersten Wicklungsabschnitts in den unteren Abschnitten der Schlitze, die zu der ersten Zone gehören, und außerhalb der dritten Zone,
- Platzieren (302) der zweiten Windungsseiten des ersten Wicklungsabschnitts in den unteren Abschnitten der Schlitze, die zu der zweiten Zone gehören,
- Platzieren (303) der ersten Windungsseiten des zweiten Wicklungsabschnitts in den unteren Abschnitten der Schlitze, die zu der dritten Zone gehören,
- Platzieren (304) der zweiten Windungsseiten des zweiten Wicklungsabschnitts in den Schlitzen, die zu der vierten Zone gehören, und
- Platzieren (305) des Rests der ersten Windungsseiten des ersten Wicklungsabschnitts in den oberen Abschnitten der Schlitze, die zu der ersten und dritten Zone gehören, nachdem die ersten Windungsseiten des zweiten Wicklungsabschnitts in den unteren Abschnitten der Schlitze, die zu der dritten und der erste Zone gehören, platziert worden sind.

15. Verfahren nach Anspruch 14, wobei das Verfahren Platzieren von Füllelementen (219, 223) in zumindest einige der Schlitze umfasst, um Positionen der Windungsseiten in Tiefenrichtungen der Schlitze zu bestimmen, so dass die Füllelemente in einem oder mehreren ersten Schlitzen die Positionen der Windungsseiten unterschiedlich zu den Füllelementen in einem oder mehreren zweiten Schlitzen bestimmen, um die Induktivitäten der Phasen der doppellagigen Mehrphasenwicklung auszugleichen, wobei die Streuinduktivität jeder Windungenseite von der Position der betrachteten Windungenseite in Tiefenrichtung des Schlitzes, der die betrachtete Windungenseite enthält, abhängig ist.

## Revendications

1. Élément de machine électrique (101, 201, 401) comprenant une structure de noyau (102, 202) et un enroulement polyphasé à double couche (103, 203), la structure de noyau ayant des dents (104) et des fentes (105, 205a, 205b) entre les dents, dans lequel chacune des fentes a une partie inférieure et une partie supérieure entre la partie inférieure et une ouverture de fente, et dans lequel chaque phase de l'enroulement polyphasé à double couche a des première et deuxième parties d'enroulement de telle sorte que :
- des premiers côtés de bobine (110) de bobines de la première partie d'enroulement sont situés dans celles des fentes appartenant à une première zone (106),
- des deuxièmes côtés de bobine (111) des bobines de la première partie d'enroulement sont situés dans celles des fentes appartenant à une deuxième zone (107), un décalage circonférentiel (ϕ) de la première zone à la deuxième zone étant inférieur à 180 degrés électriques,
- des premiers côtés de bobine (112) de bobines de la deuxième partie d'enroulement sont situés dans celles des fentes appartenant à une troisième zone (108) chevauchant partiellement la première zone, un décalage circonférentiel de la deuxième zone à la troisième zone étant de 180 degrés électriques, et
- des deuxièmes côtés de bobine (113) des bobines de la deuxième partie d'enroulement sont situés dans celles des fentes appartenant à une quatrième zone (109) chevauchant partiellement la deuxième zone, un décalage circonférentiel de la première zone à la quatrième zone étant de 180 degrés électriques,
**caractérisé en ce que** :
- les parties inférieures des fentes appartenant à la première zone (106) et à l'extérieur de la troisième zone (107) contiennent une partie des premiers côtés de bobine (110) de la première partie d'enroulement,
- les parties supérieures des fentes appartenant aux première et troisième zones (106, 108) contiennent le reste des premiers côtés de bobine (110) de la première partie d'enroulement,
- les parties inférieures des fentes appartenant à la quatrième zone (109) et à l'extérieur de la deuxième zone (107) contiennent une partie des deuxièmes côtés de bobine (113) de la deuxième partie d'enroulement, et
- les parties supérieures des fentes appartenant aux deuxième et quatrième zones (107, 109) contiennent le reste des deuxièmes côtés de bobine (113) de la deuxième partie d'enroulement.

2. Élément de machine électrique selon la revendication 1, dans lequel l'élément de machine électrique comprend en outre des éléments de remplissage (219, 223) disposés de manière à déterminer des positions d'au moins certains des côtés de bobine dans des directions en profondeur des fentes (205a, 205b) de sorte que les éléments de remplissage dans une ou des premières fentes sont disposés pour déterminer les positions des côtés de bobine différemment des éléments de remplissage dans une ou des deuxièmes fentes de manière à égaliser des inductances des phases de l'enroulement polyphasé à double couche, une inductance de fuite de chaque côté de bobine dépendant de la position du côté de bobine considéré dans la direction en profondeur de la fente contenant le côté de bobine considéré.

3. Élément de machine électrique selon la revendication 1 ou 2, dans lequel chacune des bobines de l'enroulement polyphasé à double couche comprend un élément conducteur allongé (221a, 221b) comprenant un canal de refroidissement tubulaire (220) et un matériau électroconducteur entourant le canal de refroidissement tubulaire.

4. Élément de machine électrique selon la revendication 3, dans lequel l'élément conducteur allongé (221a) comprend un conducteur électrique tubulaire constitué du matériau électroconducteur et formant le canal de refroidissement tubulaire.

5. Élément de machine électrique selon la revendication 3, dans lequel l'élément conducteur allongé (221b) comprend un tube de refroidissement (226) constitué d'un matériau différent du matériau électroconducteur, le tube de refroidissement formant le canal de refroidissement tubulaire.

6. Élément de machine électrique selon la revendication 5, dans lequel l'élément conducteur allongé comprend un faisceau (225) de fils constitué du matériau électroconducteur et entourant le tube de refroidissement.

7. Élément de machine électrique selon la revendication 5 ou 6, dans lequel le tube de refroidissement (226) est constitué d'acier inoxydable.

8. Élément de machine électrique selon l'une quelconque des revendications 1-7, dans lequel la structure de noyau (102, 202) est une structure de noyau de stator d'une machine électrique à rotor interne à flux radial, et l'enroulement polyphasé à double couche (103, 203) est un enroulement de stator de la machine électrique à rotor interne à flux radial.

9. Élément de machine électrique selon la revendication 8, dans lequel l'enroulement polyphasé à double couche est un enroulement triphasé dont le nombre de paires de pôles est de un.

10. Élément de machine électrique selon la revendication 9, dans lequel les première et deuxième parties d'enroulement de chaque phase de l'enroulement polyphasé à double couche sont connectées en parallèle l'une de l'autre.

11. Élément de machine électrique selon la revendication 9 ou 10, dans lequel le décalage circonférentiel (ϕ) de la première zone (106) à la deuxième zone (107) est de 150 degrés électriques.

12. Machine électrique comprenant un stator (431) et un rotor (432) supporté de manière rotative par rapport au stator, dans laquelle au moins l'un parmi le stator et le rotor comprend un élément de machine électrique (101, 201, 401) selon l'une quelconque des revendications 1-11.

13. Machine électrique selon la revendication 12, dans laquelle la machine électrique est une machine électrique à rotor interne à flux radial, l'élément de machine électrique (101, 201, 401) est une partie du stator, et l'élément de machine électrique est selon l'une quelconque des revendications 8-11.

14. Procédé de fabrication d'un élément de machine électrique (101) qui comprend une structure de noyau (102) et un enroulement polyphasé à double couche (103), la structure de noyau ayant des dents (104) et des fentes entre les dents, dans lequel chacune des fentes a une partie inférieure et une partie supérieure entre la partie inférieure et une ouverture de fente, et dans lequel chaque phase de l'enroulement polyphasé à double couche a des première et deuxième parties d'enroulement de telle sorte que :
des premiers côtés de bobine (110) de bobines de la première partie d'enroulement sont situés dans celles des fentes appartenant à une première zone (106),
des deuxièmes côtés de bobine (111) des bobines de la première partie d'enroulement sont situés dans celles des fentes appartenant à une deuxième zone (107), un décalage circonférentiel (ϕ) de la première zone à la deuxième zone étant inférieur à 180 degrés électriques,
des premiers côtés de bobine (112) de bobines de la deuxième partie d'enroulement sont situés dans celles des fentes appartenant à une troisième zone (108) chevauchant partiellement la première zone, un décalage circonférentiel entre la deuxième zone et la troisième zone étant de 180 degrés électriques, et
des deuxièmes côtés de bobine (113) des bobines de la deuxième partie d'enroulement sont situés dans celles des fentes appartenant à une quatrième zone (109) chevauchant partiellement la deuxième zone, un décalage circonférentiel entre la première zone et la quatrième zone étant de 180 degrés électriques,
**caractérisé en ce que** le procédé comprend :
la mise en place (301), dans les parties inférieures des fentes appartenant à la première zone et à l'extérieur de la troisième zone, d'une partie des premiers côtés de bobine de la première partie d'enroulement,
la mise en place (302), dans les parties inférieures des fentes appartenant à la deuxième zone, des deuxièmes côtés de bobine de la première partie d'enroulement,
la mise en place (303), dans les parties inférieures des fentes appartenant à la troisième zone, des premiers côtés de bobine de la deuxième partie d'enroulement,
la mise en place (304), dans les fentes appartenant à la quatrième zone, des deuxièmes côtés de bobine de la deuxième partie d'enroulement, et
la mise en place (305), dans les parties supérieures des fentes appartenant aux première et troisième zones, du reste des premiers côtés de bobine de la première partie d'enroulement après avoir mis en place les premiers côtés de bobine de la deuxième partie d'enroulement dans les parties inférieures des fentes appartenant à la troisième et la première zone.

15. Procédé selon la revendication 14, dans lequel le procédé comprend la mise en place, dans au moins certaines des fentes, d'éléments de remplissage (219, 223) pour déterminer des positions des côtés de bobine dans des directions en profondeur des fentes de sorte que les éléments de remplissage dans une ou des premières fentes déterminent les positions des côtés de bobine différemment des éléments de remplissage dans une ou des deuxièmes fentes de manière à égaliser des inductances des phases de l'enroulement polyphasé à double couche, une inductance de fuite de chaque côté de bobine dépendant de la position du côté de bobine considéré dans la direction en profondeur de la fente contenant le côté de bobine considéré.
